# EUROPÄISCHE PATENTSCHRIFT

(11) **EP 0 767 390 B1**
(45) Veröffentlichungstag und Bekanntmachung des Hinweises auf die Patenterteilung: **20.03.2002**
(21) Anmeldenummer: 96113544.9
(22) Anmeldetag: 23.08.1996
(51) Int. Cl.: G01V 3/15, H01Q 7/02

(54) **Suchgerät zum Absuchen grosser Flächen**
Search apparatus for scanning of large surfaces
Dispositif détecteur pour le balayage des surfaces étendues

(30) Priorität: 08.09.1995 DE 29514494 U
(43) Veröffentlichungstag der Anmeldung: 09.04.1997
(73) Patentinhaber: FIRMA ING. KLAUS EBINGER, D-51149 Köln (DE)
(72) Erfinder: Ebinger, Klaus, 51143 Köln (DE); Bawelski, Peter, 54413 Gusenburg/Trier (DE)
(74) Vertreter: Heim, Hans-Karl, Dipl.-Ing.

(56) Entgegenhaltungen:
- DE-A- 1 623 110
- DE-C- 393 147
- DE-C- 922 973
- DE-U- 8 800 815
- GB-A- 315 964
- PATENT ABSTRACTS OF JAPAN vol. 005, no. 078 (E-058), 22.Mai 1981 & JP 56 027508 A (PIONEER ELECTRONIC CORP), 17.März 1981,

## Beschreibung

Die Erfindung betrifft ein Suchgerät zum Absuchen von Flächen, insbesondere nach Metallobjekten, mit einem Rahmen, der ein Suchkabel aufweist, und mit einer Trageinrichtung.

Suchgeräte sind für eine Vielzahl von verschiedenen Einsatzzwecken und Möglichkeiten bekannt. Zum Absuchen großer Geländebereiche werden möglichst große Rahmen verwendet, mit denen ein schnelles Absuchen großer Flächen möglich ist.

Ein Suchgerät der eingangs genannten Art ist aus dem GM 88 00 815 bekannt. Dabei wird ein modulartig aufgebauter Rahmen zu einer beliebigen Größe zusammengefügt. Die Suchschleifen oder Suchkabel werden mit Hilfe von elastischen Klammern auf dem Rahmen befestigt. An den Stirnseiten ist jeweils ein Tragegurt befestigt, so daß das Suchgerät bequem von zwei Personen getragen werden kann.

Der Erfindung liegt die **Aufgabe** zugrunde, ein Suchgerät der eingangs genannten Art zu schaffen, welches zum Absuchen großer Flächen geeignet ist und dabei gleichzeitig besonders leicht bedienbar und handhabbar ist.

Die Lösung dieser Aufgabe erfolgt gemäß den kennzeichnenden Merkmalen des Anspruchs 1. Vorteilhafte Weiterbildungen sind in den Unteransprüchen beschrieben.

Nach einem Grundgedanken der Erfindung wird dies dadurch erreicht, daß der Rahmen faltbar ist, daß das Suchkabel auch im gefalteten Zustand des Rahmens von dem Rahmen aufgenommen ist daß der Rahmen als Polygonrahmen mit einer Mehrzahl von Seitenstücken ausgebildet ist und Stabilisierungsstangen aufweist, die höchstens genanso lang wie die Seitenstücke sind. Darunter ist zu verstehen, daß das Suchkabel auch im gefalteten Zustand in Verbindung mit dem Rahmen steht. Das Suchkabel kann sowohl im Inneren als auch auf dem Rahmen befestigt oder flexibel geführt werden. Dadurch wird es möglich, einen großen Rahmen zu verwenden, der mit wenigen Handgriffen faltbar und zusammenlegbar ist und so auch leicht beispielsweise in einem Auto transportiert werden kann.

In einem bevorzugten Lösungsansatz weist die Trageinrichtung ein mit dem Rahmen verbundenes Rohr auf. Das Rohr ist zur Aufnahme einer an die Rohrform angepaßten Auswerteeinheit ausgebildet und das Ende des Rohrs weist einen drehbaren Bereich auf, der funktionsmäßig mit einem Stufenschalter der Auswerteeinheit verbunden ist. Dadurch wird die Bedienbarkeit des Suchgeräts erheblich begünstigt. Das Suchgerät kann bequem von einem Bediener gehalten und gleichzeitig bedient werden. Dieser Lösungsansatz ist auch in Verbindung mit dem obengenannten Ansatz realisierbar.

Der Rahmen besteht bevorzugt aus Rohrteilen, die im Inneren hohl sind und in denen das Kabel verläuft. Das Rohr, welches den Rahmen bzw. das Schleifengestänge bildet, besteht vorzugsweise aus hochfestem Kohlefasermaterialien, die zum einen besonders leicht und daher gut handhabbar sind und zum anderen das Suchkabel aufnehmen können, ohne es elektromagnetisch abzuschirmen.

Das Schleifengestänge ist bevorzugt in einer sechseckigen, insbesondere aus sechs gleich langen Seitenstücken gebildeten Form aufgebaut. Denkbar sind jedoch auch eine Reihe anderer geometrischer Formen, wie z.B. rechteckige, quadratische, runde, achteckige oder zehneckige Formen. Spezielle Vorteile kann eine matrixförmige Vielfeldschleife haben, in deren Segmente einzelne Empfangsschleifen eingesetzt werden, die mit dem großen umlaufenden Suchkabel zusammenwirken.

Dabei ist es besonders vorteilhaft, daß der Rahmen auf die Länge eines der Seitenstücke zusammenfaltbar oder zusammenlegbar ist. Außerdem gehen von den Ecken der Seitenstücke die erfindungsgemäß vorgesehenen Stabilisierungsstangen aus, die höchstens genauso lang wie die Seitenstücke sind, um so die Zusammenlegbarkeit auf die Länge der Seitenstücke zu gewährleisten. In der bevorzugten sechseckigen Ausführungsform entstehen so sechs gleichseitige Dreiecke, mit denen ein besonders stabiler Aufbau des an sich sehr leichten Rahmens ermöglicht wird.

In einer besonders vorteilhaften Weiterentwicklung der Erfindung kann das Rohr teleskopartig ausziehbar ausgebildet sein und der Rahmen bzw. das Schleifengestänge mit Seilen an dem Rohr aufgehängt werden. Dadurch ergibt sich insgesamt eine besonders einfache, für eine Person ausgelegte Handhabung des Suchgeräts. Durch die Integration der Auswerteeinheit in dem teleskopartig ausziehbaren Rohr kann der Bediener das Suchgerät führen und gleichzeitig problemlos bedienen. Durch die Aufhängung des Rahmens mit Seilen am Rohr kann der Bediener den Rahmen hin und her schwenken und dadurch besonders leicht große Flächen absuchen.

Hierbei erweist es sich als vorteilhaft, die Seile am Rohr aufwickelbar zu befestigen. Durch die aufwickelbare Aufhängung ist es auch möglich, den Rahmen durch Aufwickeln in eine Schräglage zu bekommen und ihn dadurch beispielsweise durch dicht zusammenstehende Bäume führen zu können oder ihn einer Hanglage anpassen zu können.

Die Bedienbarkeit des Suchgeräts wird durch die im Rohr untergebrachte Auswerteeinheit begünstigt. Das Rohr nimmt insbesondere die Batterien zur Energieversorgung, die Auswerteeinheit und einen Stufenschalter auf.

Das Suchgerät wird günstigerweise in Pulsindukt:Lonstechnik betrieben, da dieses Verfahren den wesentlichen Vorteil hat, daß nahezu jede beliebig große Suchschleife an der jeweiligen Suchelektronik Verwendung finden kann. Schon dadurch ergibt sich die Möglichkeit, ein Suchgerät zu schaffen, welches für verschiedenste Suchaufgaben eingesetzt werden kann. Das Suchgerät kann dadurch mit seiner großen Schleifenfläche eine große Geländefläche absondieren oder auch bei der Tiefensondierung zum Einsatz kommen. Speziell für die Feinsondierung wird die verwendete Suchelektronik an eine kleinere Spule angeschlossen. Neben dem Einsatz des Suchgerätes mit Pulsinduktionstechnik, ist auch die Verwendung mit moderner Sinustechnik möglich.

Durch das erfindungsgemäße Suchsystem ist es also einem einzelnen Bediener möglich, eine ungefähr drei- bis fünfmal größere Fläche abzusuchen, als es vorher zwei Bedienern möglich war, welche die Schleife zwischen sich tragen mußten. Dies stellt eine bisher nicht erreichte Flächensuchleistung dar.

In einer besonders bevorzugten Weiterbildung der Erfindung kann die Spule auch als kompensierendes System ausgelegt werden, wozu ein durchgehender Mittelsteg ebenfalls mit einem Suchkabel versehen werden muß. Durch Einsatz eines zusätzlichen Gelenks in einem der zur Suchkabelaufnahme angepaßten Stabilisierungsstege kann der Rahmen wieder so zusammengefaltet werden, daß neben den außenliegenden Seitenstücken auch die Verbindung des in der Mitte durchlaufenden Kabels in dem modifizierten Stabilisierungsstab erhalten bleibt. Nach dem gleichen Prinzip können natürlich auch noch weitere Kabelverbindungen in und/oder an den Stabilisierungsstäben geschaffen werden.

Im folgenden soll die Erfindung anhand einer Zeichnung weiter erläutert werden. Im einzelnen zeigen die schematischen Darstellungen in
- Fig. 1: eine perspektivische Gesamtansicht des erfindungsgemäBen Suchgeräts;
- Fig. 2: eine Draufsicht auf das erfindungsgemäße Suchgerät;
- Figuren 3 bis 5: vergrößerte Ausschnitte des Suchgeräts gemäß Figur 2;
- Figuren 6a bis d: den zusammenfaltbaren Rahmen in verschiedenen Stadien des Zusammenlegens;
- Fig. 7: die Aufhängung des Rahmens am Tragrohr;
- Fig. 8: eine Detailansicht aus Figur 7;
- Figuren 9, 10 und 11: weitere Detailansichten der Gelenke des Rahmens;
- Fig. 12: eine Ansicht des Tragrohres;
- Figuren 13 und 14: vergrößerte Ausschnittsdarstellungen der Figur 12;
- Figur 15: einen zusammenfaltbaren Rahmen mit kompensierender Schleife im mittleren Stabilisierungsstab; und
- Figur 16: Faltung des zusammenlegbaren Rahmens gemäß Figur 15.

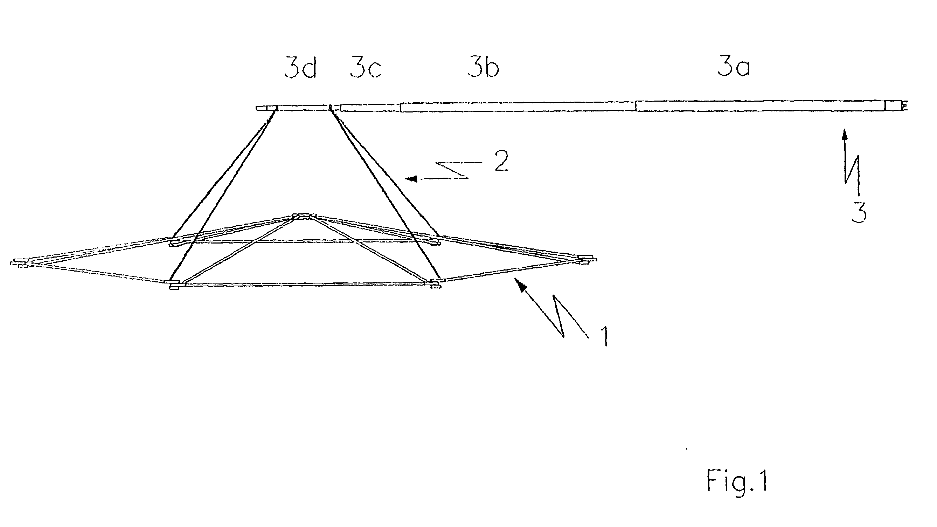

In Figur 1 ist die Gesamtanordnung mit dem Rahmen 1, dem Tragrohr 3 und dem Seilsystem 2 dargestellt. Das Tragrohr 3, welches auch einfach als Rohr bezeichnet wird, besteht aus den Elementen 3a bis 3d und ist teleskopartig ein- und ausziehbar. Das Seilsystem 2 besteht aus zwei Aufhängungen mit jeweils zwei Seilen, so daß eine Vierpunktaufhängung des Rahmens 1 vorliegt.

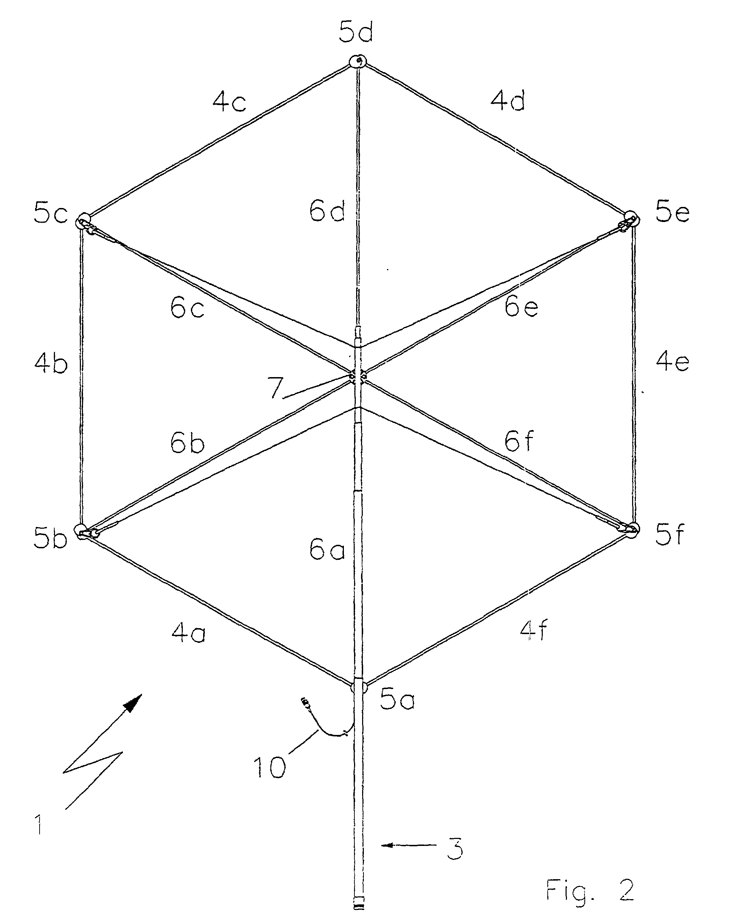

Diese Vierpunktaufhängung des Seilsystems 2 ist in Figur 2 gut zu erkennen. Der eigentliche Rahmen 1 besteht aus den umlaufenden Seitenstücken 4a, 4b, 4c, 4d, 4e und 4f und den von den in den Ecken angeordneten Gelenken 5a, 5b, 5c, 5d, 5e und 5f ausgehenden Stabilisierungsstäben 6a, 6b, 6c, 6d, 6e und 6f. Diese Stabilisierungsstäbe treffen sich im Zentrum und sind dort auf einer Halteplatte 7 befestigt. Das Seilsystem 2 ist punktymmetrisch zum Zentrum an dem Rahmen 1 und dem Tragrohr 3 befestigt, so daß sich eine ausgewogene Aufhängung ergibt. Die Stabilisierungstäbe bestehen aus hohlen, hochfesten Kohlefaserrohren.

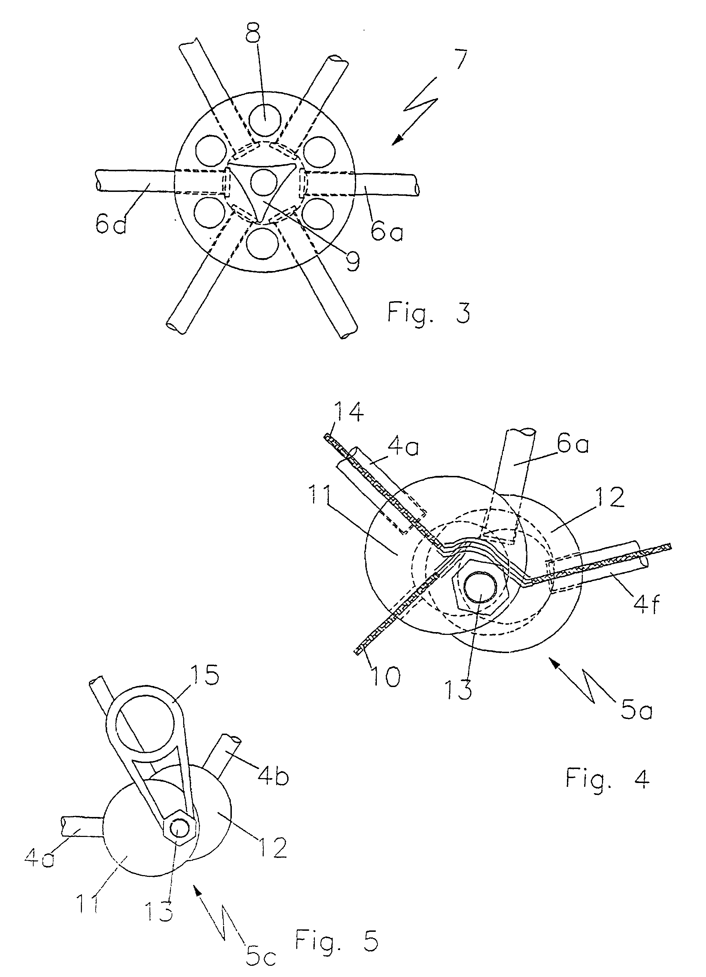

Eine Detailansicht der Halteplatte 7 ist in Figur 3 dargestellt. Hier erkennt man die in die Halteplatte 7 laufenden Stabilisierungsstäbe 6a bis 6f, die durch Verbindungsstifte 8 in der zweiteiligen Halteplatte 7 ausgerichtet werden. Eine zentrale Schraube 9 dient zum Anziehen der beiden Teile der Halteplatte 7 und damit zum endgültigen Fixieren der Stabilisierungsstäbe.

In Figur 4 ist das Gelenk 5a mit dem Suchspulenanschluß 10 dargestellt. Das Gelenk besteht im wesentlichen aus zwei Kunststoffscheiben 11 und 12, die mit einer Schraube 13 verbunden sind. Von dem Gelenk aus verlaufen die Seitenstücke 4a und 4f, in deren Innerem das Suchkabel 14 entlanggeführt wird. Weiterhin geht von diesem Gelenk der Stabilisierungsstab 6a aus. Zur Halterung des Stabilisierungsstabs 6a ist in dem Gelenk eine dritte Kunststoffscheibe vorgesehen, die in dieser Figur gestrichelt eingezeichnet ist.

In Figur 5 ist das Gelenk 5c dargestellt, welches im wesentlichen aus den Kunststoffscheiben 11 und 12 mit der Fixierungsschraube 13 besteht. An der Fixierungsschraube 13 ist auch ein Träger des Schleifensystems 2 mit einer schlaufenförmigen Aufhängung 15 befestigt. Weiterhin erkennt man die Ansätze der Seitenstücke 4b und 4c und des Stabilisierungsstabs 6c.

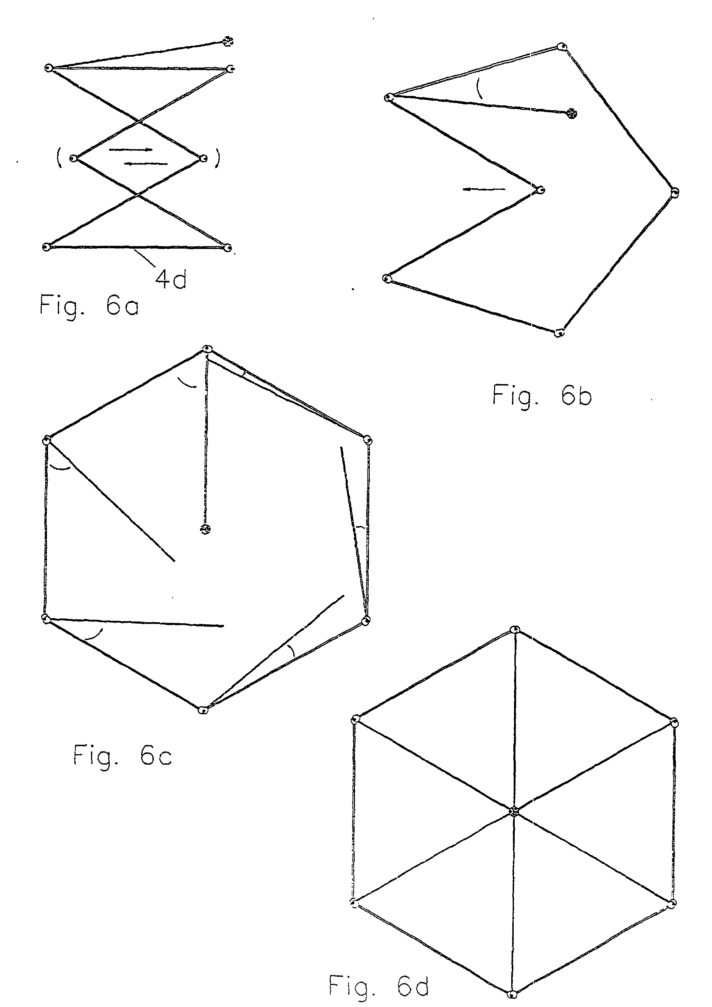

In den Figuren 6a bis 6d ist das Auseinanderfalten des Rahmens 1 dargestellt. Ursprünglich war der gesamte Rahmen im Bereich des unteren Seitenstücks 4d in Figur 6a konzentriert. Durch gleichzeitiges Hoch- und Auseinanderziehen wird der Zustand in Figur 6a erreicht. Zieht man die außenliegenden Gelenke in Pfeilrichtung auseinander, so gelangt man zu der in Figur 6b dargestellten Position. Danach werden die an den Seitenstücken anliegenden Stabilisierungsstäbe zum Zentrum hin geklappt, so wie es in Figur 6c dargestellt ist. Danach werden die Stabilisierungsrohre auf der Halteplatte 7 im Zentrum des Rahmens verschraubt. Man erhält so die stabile sechseckige Anordnung gemäß Figur 6d. Das erfindungsgemäße Suchgerät wird in Pulsinduktionstechnik betrieben und kann ein Einschleifensystem oder auch ein kompensierendes oder differenzierendes Schleifensystem enthalten. In den in Figur 6 dargestellten faltbaren Rahmen kann eine Schleife oder können auch mehrere Schleifen eingezogen werden. Hierzu bedarf es lediglich eines rohrartigen Mittelsteges, der ebenfalls klappbar ausgeführt ist. Das eigentliche Suchkabel, das durch die Seitenstücke 4 des Rahmens 1 hindurchgeführt wird, ist ein Mehrfachkabel, das elektrisch geschirmt sein kann.

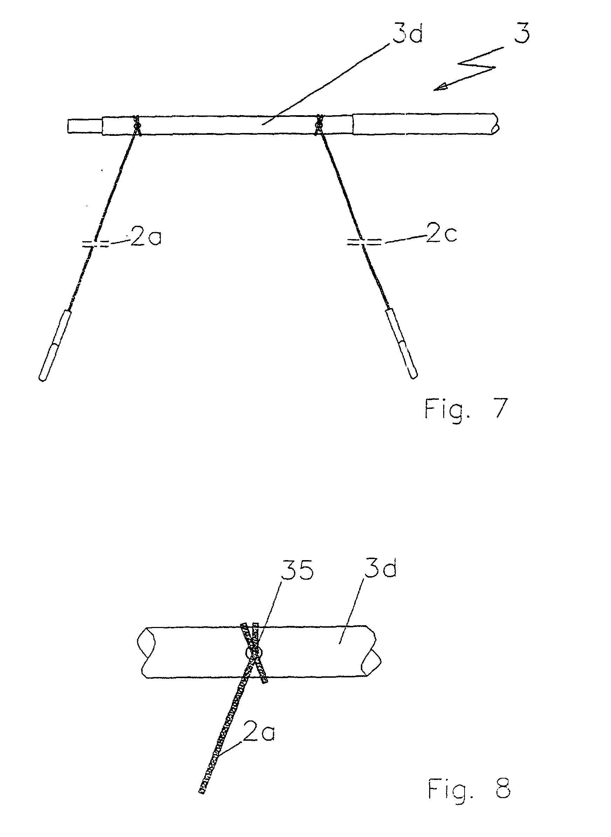

In Figur 7 ist das teleskopartig ausziehbare Rohr und insbesondere das Rohrelement 3d dargestellt. An diesem sind die Seilelemente 2a und 2c befestigt, die unten am Rahmen 1 aufgehängt sind.

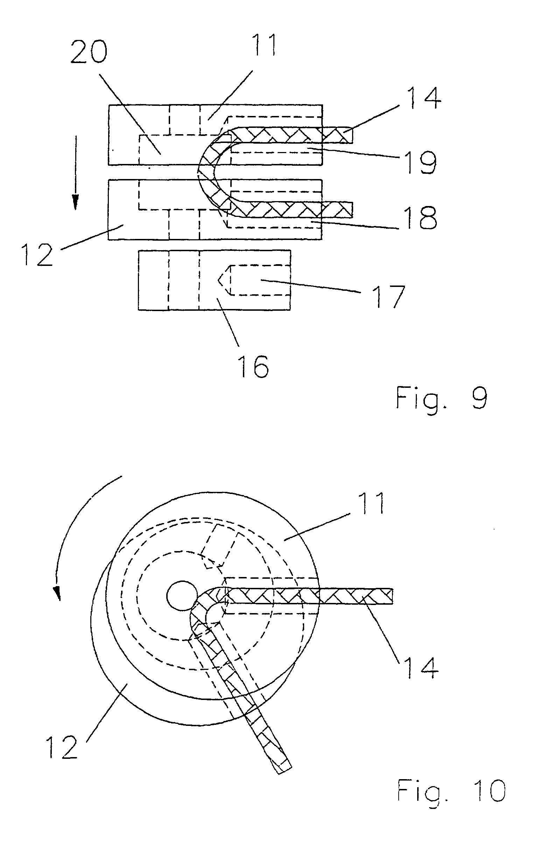

In der Detailansicht in Figur 8 erkennt man, daß das Seil 2a durch eine Bohrung 35 in dem Rohrelement 3d geführt wird und auf diese Weise in dem Tragrohr 3 befestigt ist. Kippen des Tragrohres führt also zu einer Verlängerung des Seils auf einer Seite und zur Verkürzung des Seils auf der anderen Seite und damit insgesamt zu einer Schiefstellung des Rahmens. Der gleiche Effekt und eine Verkürzung des Seilsystems insgesamt tritt bei einer Wicklung und Drehung des Rohres 3 auf.

In Figur 9 ist ein Querschnitt durch eines der Gelenke 5 dargestellt. Die Gelenke bestehen aus den Scheiben 11 und 12 und werden von einer durchgängigen Fixierungsschraube 13 gehalten. Sowohl die Gelenkscheiben als auch die Schraube sind aus Kunststoff, damit das durchgehende Suchkabel 14 nicht durch irgendwelche Metallgegenstände in seiner Funktion beeinträchtigt wird. An der Schraube 13 ist ferner eine dritte Scheibe 16 befestigt, die eine Ausnehmung 17 zur Aufnahme eines Stabilisierungsstabes aufweist. Eine Draufsicht auf dieses Gelenk ist noch einmal in Figur 10 dargestellt.

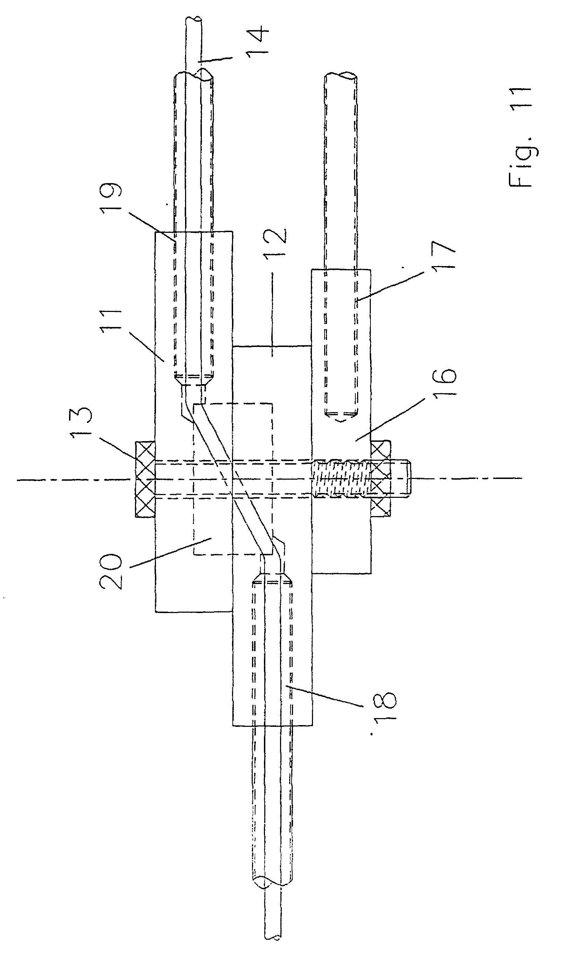

In Fig. 11 ist ein ähnlicher Querschnitt wie in Fig. 9 dargestellt, wobei jedoch das Gelenk mit den beiden Scheiben 11 und 12 und dem durchgängigen Suchkabel 14 anders ausgerichtet ist. Die durch Bohrungen erzeugten Ausnehmungen 18 und 19 in den Scheiben 12 und 11 dienen der Aufnahme der Seitenstücke 4, in deren Inneren das Suchkabel geführt wird. Die Scheiben 11 und 12 weisen außerdem eine Ausnehmung 20 auf, so daß das Suchkabel 14 um die Fixierungsschraube 13 herum von einer Scheibe in die andere geführt werden kann.

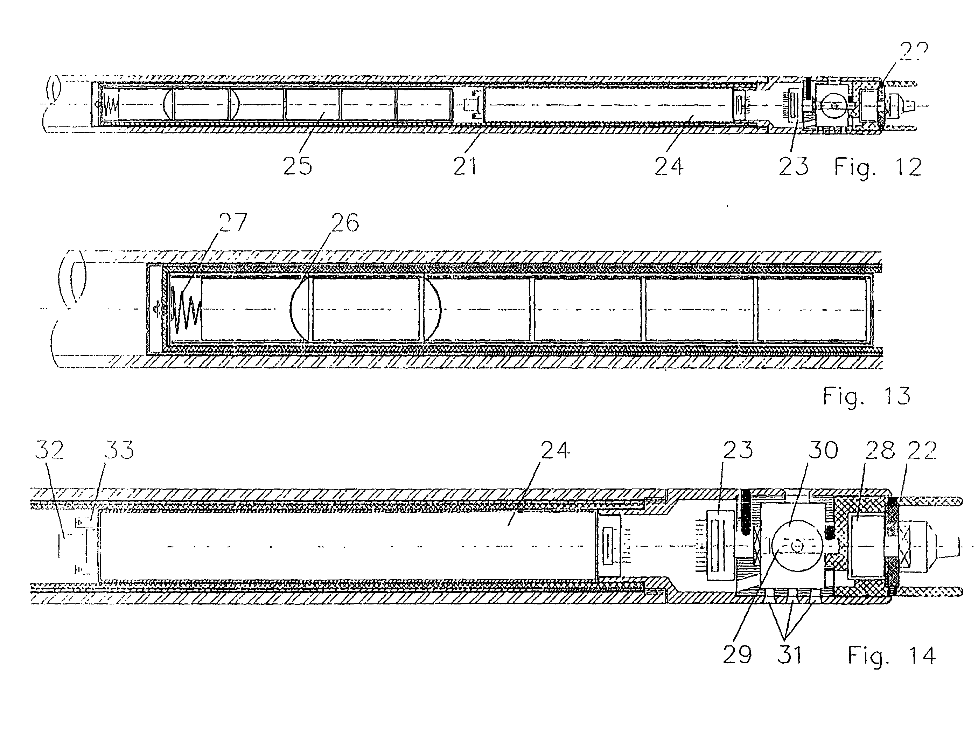

In Fig. 12 ist eine Teilansicht des Tragrohrs 3 dargestellt. Das Gehäuse 21 des Rohres 3 weist an seinem rückwärtigen, also dem bedienerseitigen Ende einen drehbaren Bereich 22 auf, welcher in Verbindung mit dem internen Stufenschalter 23 steht. Die Auswerteeinheit weist weiterhin eine Elektronikpatrone 24 auf, die mit dem Stufenschalter 23 verbunden ist. Im Anschluß an die Elektronikpatrone 24 ist ein Batteriefach 25 mit in diesem Fall sechs Batterien vorgesehen. Eine vergrößterte Ansicht des Batterieraums ist in Fig. 13 dargestellt. In dem Rohr ist ein Rohrschlitz 26 vorgesehen, durch den Batterien eingefüllt werden können und über eine Feder 27 kontaktiert werden. Der Rohrschlitz 26 wird automatisch durch Einschrauben der Elektronik in das Rohr 3 verdeckt. Durch den Batterieraum verläuft ein Flachkabel für den Anschluß des Suchgeräts. Es mündet am vorderen Ende des Elektronikgehäuses in einen Verbindungsstecker. Der Verbindungsstecker mit Kabel befindet sich im Teleskoprohr und ist dadurch geschützt untergebracht. Eine vergrößerte Ansicht des hinteren Teils des Rohres 3 ist in Fig. 14 dargestellt. Dort ist das drehbare Teil 22 mit einem Feineinsteller 28 dargestellt und über eine Achse 29 mit dem internen Stufenschalter 23 verbunden. Unter der Achse 29 des Stufenschalters ist auch der Signalgeber 30 befestigt, dessen Schallsignale über Löcher 31, die über den gesamten Umfang des Rohrs 3 verteilt sind, austreten können. Der drehbare, schaltende Teil des Gehäuses nimmt gleichzeitig den koaxial darin angeordneten Feineinsteller 28 auf und hat damit zwei mechanische Funktionen übernommen, ohne daß die koaxiale Konstruktion der Mechanik durch andere Bedienelemente gestört wird. Vor dem Stufenschalter 23 ist die Elektronikpatrone 24 angeordnet. Sie besteht aus einem Zylinder aus Isolierstoff, der zwei oder mehr vergossene Leiterplatten aufnimmt. Dadurch ist der Aufbau schockund tropenfest. An den Hauptleiterplatten befinden sich Kontaktleisten für die interne Geräteverkabelung, die ohne Lötverbindung durch einen Stecker gelöst werden kann. Auf der Stirnseite der vergossenen Elektronikpatrone 24 befindet sich ein weiterer Stecker 32 für den Anschluß des Suchgeräts sowie zwei oder mehrere Einstellelemente 33 für den Grundabgleich des Suchgeräts.

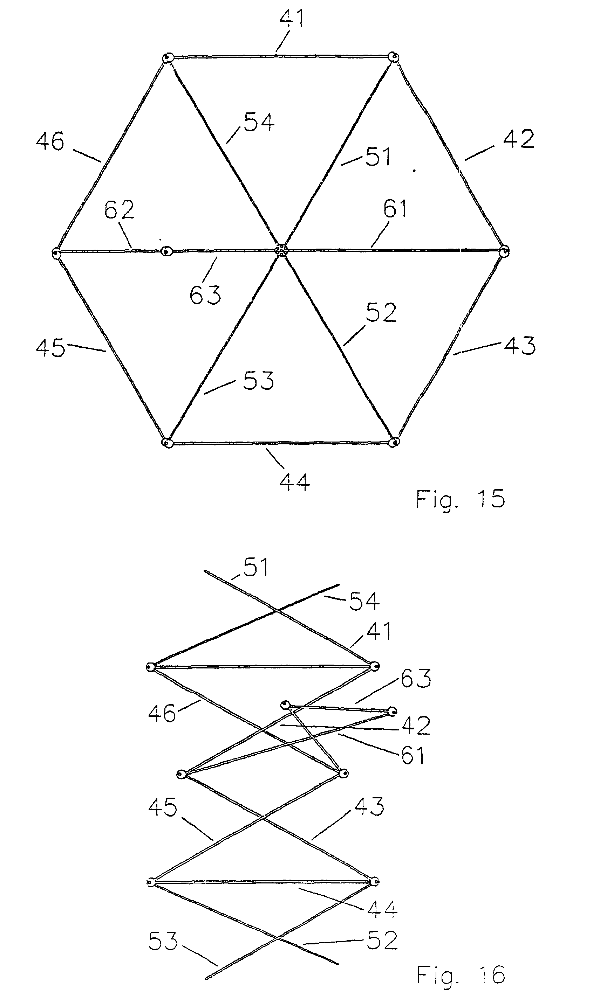

Eine weitere Ausführungsform der Erfindung ist in Fig. 15 dargestellt. Zum Aufbau einer kompensierenden Suchschleife wird ein Suchkabel durch den mittleren Stabilisierungsstab 61, 62, 63 geführt, wobei beim Zusammenfalten des Rahmens nicht nur die Verbindung der umlaufenden Seitenstücke 41, 42, 43, 44, 45 und 46, sondern auch die in der Mitte durchlaufende Verbindung der Stabilisierungsstäbe 61, 62 und 63 erhalten bleiben muß. Dafür ist eine Modifikation der Gelenke gegenüber dem in Fig. 6 dargestellten zusammenfaltbaren Rahmen nötig, da hier eine zusätzliche Verbindung bestehen bleiben muß. So muß die in Fig. 3 dargestellte zentrale Halteplatte so abgewandelt werden, daß zwei zueinander drehbare Scheiben vorgesehen sind, die zur Aufnahme der Stabilisierungsstangen 63 und 61 und zur Durchführung des durchlaufenden Suchkabels geeignet sind. Ferner muß die zentrale Halteplatte dieser Ausführungsform einen Hohlraum zur lösbaren Aufnahme der übrigen vier Stabilisierungsstäbe 51, 52, 53 und 54 aufweisen. Die vier Eckgelenke an den üblichen Stabilisierungsstäbe 51, 52, 53 und 54 sind gegenüber der einfachen Ausführungsform ohne kompensierende Schleife unverändert und so aufgebaut, wie es in Fig. 11 dargestellt ist. In Abänderung dazu sind die Eckgelenke an den mittleren Stabilisierungsstäben 62 und 61 mit einer weiteren Kabeldurchführung versehen, die es erlaubt, auch Kabel von den Seitenstücken 45 und 46 bzw. 42 und 43 in die Stabilisierungsstangen 62 bzw. 61 einzuführen. Ein zusätzliches, aus zwei gegeneinander verdrehbaren Scheiben bestehendes und zur Kabeldurchführung geeignetes Gelenk ist in der Mitte des zweigeteilten Stabilisierungsstabes 62, 63 eingefügt.

Das Zusammenfalten dieses Rahmens wird mit Bezug auf die Figuren 15 und 16 beschrieben. Dabei muß ebenfalls zunächst, ähnlich wie in den Figuren 6a bis 6d, die zentrale Halteplatte gelöst werden, so daß die Stabilisierungsstäbe 51, 52, 53 und 54 gelöst werden und nach außen umgeklappt werden. Die gegenüberliegenden Seitenstücke 42, 43 und 45, 46 werden jeweils zur gegenüberliegenden Seite durchgezogen, so daß die Seitenstücke für sich genommen eine Struktur ähnlich wie in Fig. 6a bilden. Durch das zusätzliche Gelenk in dem zweigeteilten Stabilisierungsstab 62, 63 und das Gelenk in der zentralen Halteplatte zwischen den Stabilisierungsstäben 61 und 63 bleibt auch die Keibelverbindung durch die Stäbe 61, 63 und 62 erhalten, so wie dies in Fig. 16 dargestellt ist. Im letzten, an Fig. 16 anschließenden Schritt, wird der in Fig. 16 dargestellte, teilgefaltete Rahmen weiter von oben und unten zusammengedrückt, bis auch dieser Rahmen auf die Größe von im wesentlichen einem Seitenstück zusammengelegt ist.

## Patentansprüche

1. Suchgerät zum Absuchen von Flächen, insbesondere nach Metallobjekten, mit einem Rahmen, der mindestens ein Suchkabel aufweist, und mit einer Trageinrichtung,
**dadurch gekennzeichnet,**
**daß** der Rahmen (1) faltbar ausgebildet ist,
**daß** das Suchkabel (14) auch in einem gefalteten Zustand des Rahmens (1) vom Rahmen aufgenommen ist,
**daß** der Rahmen (1) als Polygonrahmen mit einer Mehrzahl von Seitenstücken (4a bis 4f) ausgebildet ist und Stabilisierungsstangen (6a bis 6f) aufweist, die höchstens genauso lang wie die Seitenstücke (4a bis 4f) sind.

2. Suchgerät nach Anspruch 1,
**dadurch gekennzeichnet,**
**daß** die Trageinrichtung ein mit dem Rahmen (1) verbundenes Rohr (3) aufweist,
**daß** das Rohr (3) zur Aufnahme einer an die Rohrform angepaßten Auswerteeinheit (23, 24, 25) ausgebildet ist, und
**daß** das Ende des Rohres (3) einen drehbaren Bereich (22) aufweist, der funktionsmäßig mit einem Schalter (23) der Auswerteeinheit (23, 24, 25) verbunden ist, und eine koaxial angeordnete Feineinstelleinrichtung (28) aufnimmt.

3. Suchgerät nach einem der vorhergehenden Ansprüche,
**dadurch gekennzeichnet,**
**daß** der Rahmen (1) im wesentlichen aus Rohren (4a bis 4f, 6a bis 6f) besteht.

4. Suchgerät nach einem der vorhergehenden Ansprüche,
**dadurch gekennzeichnet,**
**daß** die Rohre (4a bis 4f, 6a bis 6f) aus Kohlefaseroder Glasfasermaterialien aufgebaut sind.

5. Suchgerät nach einem der vorhergehenden Ansprüche,
**dadurch gekennzeichnet,**
**daß** der Rahmen (1) sechs Seitenstücke (4a bis 4f) aufweist.

6. Suchgerät nach einem der vorhergehenden Ansprüche,
**dadurch gekennzeichnet,**
**daß** der Rahmen (1) auf die Länge eines der Seitenstücke (4) zusammenlegbar ist.

7. Suchgerät nach einem der vorhergehenden Ansprüche,
**dadurch gekennzeichnet,**
**daß** das Rohr (3) der Trageinrichtung teleskopartig ausziehbar ist.

8. Suchgerät nach einem der vorhergehenden Ansprüche,
**dadurch gekennzeichnet,**
**daß** der Rahmen (1) mit Seilen (2) am Rohr (3) aufgehängt ist.

9. Suchgerät nach einem der vorhergehenden Ansprüche,
**dadurch gekennzeichnet,**
**daß** die Seile (2) am Rohr (3) aufwickelbar sind.

10. Suchgerät nach einem der vorhergehenden Ansprüche,
**dadurch gekennzeichnet,**
**daß** das Suchgerät mit Pulsinduktionstechnik ausgestattet ist.

11. Suchgerät nach einem der vorhergehenden Ansprüche,
**dadurch gekennzeichnet,**
**daß** eine zentrale Halteplatte (7) vorgesehen ist, in der die Stabilisierungsstäbe (6a bis 6f) aufnehmbar und durch eine zentrale Schraube (9) festlegbar sind.

12. Suchgerät nach einem der vorhergehenden Ansprüche,
**dadurch gekennzeichnet,**
**daß** die Seitenstücke (4a bis 4f) des Rahmens (1) Gelenke (5a bis 5f) aufweisen, die aus drei übereinander angeordneten und mit einer Kunststoffschraube (13) verbundenen Kunststoffscheiben (11, 12, 16) bestehen, von denen zwei zur Aufnahme je eines Seitenstücks und eine zur Aufnahme eines Stabilisierungsstabs vorgesehen sind.

13. Suchgerät nach Anspruch 1,
**dadurch gekennzeichnet,**
**daß** mindestens ein Suchkabel im Inneren des Rahmens angeordnet ist und/oder auf den Rahmen aufgelegt und fixiert ist.

14. Suchgerät nach Anspruch 13,
**dadurch gekennzeichnet,**
**daß** zusätzlich zu einer im Inneren des Rahmens angeordneten Schleife, z.B. einem Suchkabel, mindestens eine weitere Schleife außen am Rahmen vorgesehen ist.

15. Suchgerät nach einem der vorhergehenden Ansprüche,
**dadurch gekennzeichnet,**
**daß** zwei Stabilisierungsstäbe (61, 62 und 63) zur Aufnahme einer zusätzlichen Suchschleife und/oder einer kompensierenden Schleifenanordnung ausgebildet sind.

16. Suchgerät nach Anspruch 15,
**dadurch gekennzeichnet,**
**daß** einer der zur Aufnahme des Suchkabels ausgelegten Stabilisierungsstäbe ein zusätzliches, insbesondere zentral angeordnetes Gelenk aufweist.

17. Suchgerät nach Anspruch 15 oder 16,
**dadurch gekennzeichnet,**
**daß** die zentrale Halteplatte zur lösbaren Aufnahme von vier Stabilisierungsstäben (51, 52, 53, 54) und zur drehbaren Halterung der kabelführenden Stabilisierungsstäbe (61, 62 und 63) vorgesehen ist.

## Claims

1. Search device for searching surfaces, especially for metal objects, having a frame with at least one search cable and with a carrying device,
**characterized in that**
the frame (1) is foldable,
the search cable (14) is received by the frame, even when the latter is folded up,
the frame (1) is constructed as a polygonal frame with a plurality of side pieces (4a to 4f) and comprises stabilizing rods (6a to 6f) which are at the most just as long as the side pieces (4a to 4f).

2. Search device according to claim 1,
**characterized in that**
the carrying device has a tube (3) connected to the frame (1),
the tube (3) is constructed for receiving an evaluating unit (23, 24, 25) adapted to the tubular shape, and
that the end of the tube (3) has a rotary area (22), which is functionally connected to a switch (23) of the evaluating unit (23, 24, 25), and receives a coaxially positioned fine adjustment device (28.

3. Search device according to one of the preceding claims,
**characterized in that**
the frame (1) essentially comprises tubes (4a to 4f, 6a to 6f).

4. Search device according to one of the preceding claims,
**characterized in that**
the tubes (4a to 4f, 6a to 6f) are formed from carbon fibre or glass fibre materials.

5. Search device according to one of the preceding claims,
**characterized in that**
the frame (1) comprises six side pieces (4a to 4f).

6. Search device according to one of the preceding claims,
**characterized in that**
the frame (1) can be collapsed to the length of one of the side pieces (4).

7. Search device according to one of the preceding claims,
**characterized in that**
the tube (3) of the carrying device is telescopically extendable.

8. Search device according to one of the preceding claims,
**characterized in that**
the frame (1) is suspended with cables (2) on the tube (3).

9. Search device according to one of the preceding claims,
**characterized in that**
the cables (2) can be wound on the tube (3).

10. Search device according to one of the preceding claims,
**characterized in that**
the search device is equipped with pulse induction technology.

11. Search device according to one of the preceding claims,
**characterized in that**
a central retaining plate (7) is provided, which receives the stabilizing rods (6a to 6f) which can be fixed by a central screw (9).

12. Search device according to one of the preceding claims,
**characterized in that**
the side pieces (4a to 4f) of the frame (1) have joints (5a to 5f), which comprise three superimposed plastic disks (11, 12, 16) connected to a plastic screw (13) and whereof two are provided for receiving in each case one side piece and one for receiving a stabilizing rod.

13. Search device according to claim 1,
**characterized in that**
at least one search cable is located in the interior of the frame and/or is placed on and fixed to the frame.

14. Search device according to claim 13,
**characterized in that**
in addition to a loop located in the interior of the frame, e.g. a search cable, at least one further loop is provided externally on the frame.

15. Search device according to one of the preceding claims,
**characterized in that**
two stabilizing rods (61, 62 and 63) are formed for receiving an additional search loop and/or a compensating loop arrangement.

16. Search device according to claim 15,
**characterized in that**
one of the stabilizing rods for receiving the search cable has an additional in particular centrally positioned joint.

17. Search device according to claim 15 or 16,
**characterized in that**
the central retaining plate is provided for a detachable reception of four stabilizing rods (51, 52, 53, 54) and for the rotary retaining of the cable-guiding stabilizing rods (61, 62 and 63).

## Revendications

1. Dispositif détecteur pour le balayage de surfaces, en particulier pour détecter des objets métalliques, avec un cadre qui présente au moins un câble détecteur, et avec un dispositif de support,
***caractérisé***
***en ce que*** le cadre (1) est conformé pliant,
***en ce que*** le câble détecteur (14) est également logé dans le cadre dans un état replié du cadre (1),
***en ce que*** le cadre (1) est conformé en cadre polygonal avec une pluralité de parties latérales (4a à 4f) et présente des barres stabilisatrices (6a à 6f), qui sont au maximum aussi longues que les parties latérales (4a à 4f).

2. Dispositif détecteur selon la Revendication 1, ***caractérisé***
***en ce que*** le dispositif de support présente un tube (3) relié au cadre (1),
***en ce que*** le tube (3) est conformé pour recevoir une unité d'analyse (23, 24, 25) adaptée à la forme du tube, et
***en ce que*** l'extrémité du tube (3) présente une zone rotative (22), qui est reliée de manière fonctionnelle à un contacteur (23) de l'unité d'analyse (23, 24, 25), et reçoit un dispositif de réglage fin (28) disposé de manière coaxiale.

3. Dispositif détecteur selon l'une quelconque des Revendications précédentes, ***caractérisé en ce que*** le cadre (1) se compose pour l'essentiel de tubes (4a à 4f, 6a à 6f).

4. Dispositif détecteur selon l'une quelconque des Revendications précédentes, ***caractérisé en ce que*** les tubes (4a à 4f, 6a à 6f) sont composés de matériaux en fibres de carbone ou en fibres de verre.

5. Dispositif détecteur selon l'une quelconque des Revendications précédentes, ***caractérisé en ce que*** le cadre (1) présente six parties latérales (4a à 4f).

6. Dispositif détecteur selon l'une quelconque des Revendications précédentes, ***caractérisé en ce que*** le cadre (1) peut être replié à la longueur de l'une des parties latérales (4).

7. Dispositif détecteur selon l'une quelconque des Revendications précédentes, ***caractérisé en ce que*** le tube (3) du dispositif support est extensible de manière télescopique.

8. Dispositif détecteur selon l'une quelconque des Revendications précédentes, ***caractérisé en ce que*** le cadre (1) est accroché par des cordages (2) sur le tube (3).

9. Dispositif détecteur selon l'une quelconque des Revendications précédentes, ***caractérisé en ce que*** les cordages (2) peuvent être enroulés sur le tube (3).

10. Dispositif détecteur selon l'une quelconque des Revendications; précédentes, ***caractérisé en ce que*** le dispositif détecteur est équipé d'une technique à induction de pulsations.

11. Dispositif détecteur selon l'une quelconque des Revendications précédentes, ***caractérisé en ce* qu'**une plaque de maintien centrale (7) est prévue, dans laquelle les barres stabilisatrices (6a à 6f) peuvent être logées et immobilisées par une vis centrale (9).

12. Dispositif détecteur selon l'une quelconque des Revendications précédentes, ***caractérisé en ce que*** les parties latérales (4a à 4f) du cadre (1) présentent des articulations (5a à 5f), qui se composent de trois disques en matière plastique (11, 12, 16) superposés et reliés par une vis en matière plastique (13), dont deux sont prévus pour recevoir chacun une partie latérale et un pour recevoir une barre stabilisatrice.

13. Dispositif détecteur selon la Revendication 1, ***caractérisé en ce qu'***au moins un câble détecteur est placé à l'intérieur du cadre et/ou est posé et fixé sur le cadre.

14. Dispositif détecteur selon la Revendication 13, ***caractérisé en ce qu'***en plus d'une boucle placée à l'intérieur du cadre, par exemple un câble détecteur, il est prévu au moins une autre boucle à l'extérieur sur le cadre.

15. Dispositif détecteur selon l'une quelconque des Revendications précédentes, ***caractérisé en ce que*** deux barres stabilisatrices (61, 62 et 63) sont conformées pour recevoir une boucle détectrice supplémentaire et/ou un système de boucle de compensation.

16. Dispositif détecteur selon la Revendication 15, ***caractérisé en ce que*** l'une des barres stabilisatrices conformée pour recevoir le câble détecteur présente une articulation supplémentaire, en particulier en position centrale.

17. Dispositif détecteur selon la Revendication 15 ou 16, ***caractérisé en ce que*** la plaque de maintien centrale est prévue pour recevoir de manière amovible quatre barres stabilisatrices (51, 52, 53, 54) et pour soutenir de manière rotative les barres stabilisatrices (61, 62 et 63) qui guident le câble.
